(19) **Europäisches Patentamt / European Patent Office / Office européen des brevets**

(11) **EP 2 755 059 B1**

(12) **EUROPEAN PATENT SPECIFICATION**

(45) Date of publication and mention
of the grant of the patent:
**03.11.2021 Bulletin 2021/44**

(51) Int Cl.:
**G01V 1/36** *(2006.01)*        *G01V 1/30* *(2006.01)*

(21) Application number: **14151176.6**

(22) Date of filing: **14.01.2014**

(54) **Seismic data processing including data-constrained surface-consistent correction**

Verarbeitung seismischer Daten einschließlich datenabhängiger, oberflächenkonsistenter Korrektur

Traitement de données sismiques comprenant une correction de surface de données contraintes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2013 US 201361752650 P**

(43) Date of publication of application:
**16.07.2014 Bulletin 2014/29**

(73) Proprietor: **CGG Services SAS**
**91300 Massy (FR)**

(72) Inventors:
• **Garceran, Katia**
**91300 Massy (FR)**
• **Le Meur, David**
**91300 Massy (FR)**

• **Lévêque, André**
**91300 Massy (FR)**

(74) Representative: **Ipsilon**
**Le Centralis**
**63, avenue du Général Leclerc**
**92340 Bourg-la-Reine (FR)**

(56) References cited:
**US-A- 5 629 905          US-A1- 2011 069 581**
**US-A1- 2012 253 681**

• **TURHAN TANER M ET AL: "Surface consistent corrections", GEOPHYSICS, SOCIETY OF EXPLORATION GEOPHYSICISTS, US, vol. 46, no. 1, 1 January 1981 (1981-01-01), pages 17-22, XP002670905, ISSN: 0016-8033, DOI: 10.1190/1.1441133**

**Description**

**RELATED APPLICATION**

The present application is related to, and claims priority from U.S. Provisional Patent Application No. 61/752,650, filed January 15, 2013, entitled "Data-Constrained Surface-Consistent Amplitude Correction," to Katia Garceran, David Le Meur and Andre Levèque.

**TECHNICAL FIELD**

Embodiments of the subject matter disclosed herein generally relate to methods and systems for seismic data processing and, more particularly, to mechanisms and techniques for correcting near-surface issues by constraining inversions for surface consistent corrections.

**BACKGROUND**

For on-shore seismic recorded data, surface consistent corrections are commonly used in seismic time processing to correct part of the distortions associated with near-surface irregularities. However, it is difficult to solve for the long wavelength components of the solutions to the surface consistent equations, especially when the near-surface variations occur over large areas.

As presented by R. Wiggins, K. Larner and R. Wisecup in their 1976 paper entitled "Residual Statics Analysis as a General Linear Inverse problem," published in Geophysics, volume 41, pages 922-938 (hereinafter "Wiggins et. al."). the natural repository for the long wavelength components remains in the structural term, i.e., the Common Middle Point (CMP) term and the offset term is expected to collect ground-roll.

Looking to the four-term (source-receiver-CDP-offset) surface consistent system of equations, it is apparent that indeterminacies of quadratic order are present, meaning long-wavelength changes of the surface consistent variations are difficult to isolate, as described by M. T. Taner and F. Koelher in their 1981 paper entitled "Surface Consistent Corrections," published in Geophysics volume 46, pages 17-22. Recently, several attempts have been made to improve long-wavelength surface consistent solutions as described by P. Cary and G. Lorentz in their 1993 article entitled "Four-Component Surface-Consistent Deconvolution," published in Geophysics, volume 58, pages 383-392, proposed different treatment for the CDP term by solving it first in the iterative process and by smoothing it, introducing a constraint on the CDP term and J. Millar and J. C. Bancroft showed in their 2006 paper entitled "Long Wavelength Surface Consistent Solutions," published in CREWES Research Report, that a better long wavelength resolution is obtained when using a multi-grid method approach.

Document US 2012/0253681 A1 discloses a system and method for processing seismic data.

Further, Wiggins et al. described that only information obtained from a source independent of the CDP reflection time data is required to obtain a geologically plausible solution for the longer wavelengths. Accordingly, it would be desirable to provide systems and methods that avoid the afore-described problems and drawbacks, and provide surface consistent corrections based on constraining the surface consistent inversion.

**SUMMARY**

These, and other, drawbacks and problems associated with seismic data processing can be overcome by various embodiments described herein. According to an aspect that is not covered by the appended claims, a method for seismic data processing includes the steps of constraining a surface consistent inversion associated with correction of wavelengths of a surface consistent seismic attribute, which surface consistent inversion can be used for 2D, 3D, 4D surveys or for a merge of different surveys.

According to an embodiment of the invention, a method for constraining a surface consistent equation associated with a correction of wavelengths of a surface consistent seismic attribute includes the steps recited in claim 1.

According to another embodiment of the invention, a system for processing seismic data by constraining a surface consistent equation associated with a correction of wavelengths of a surface consistent seismic attribute includes the features recited in claim 9.

**BRIEF DESCRIPTION OF THE DRAWINGS**

The accompanying drawings, which are incorporated in and constitute a part of the specification, illustrate one or more embodiments and, together with the description, explain these embodiments. In the drawings:

Figure 1 shows various aspects of a conventional onshore seismic data acquisition system;

Figure 2 shows various aspects of a conventional onshore seismic data acquisition system according to an embodiment;

Figure 3 is a schematic diagram indicating waves generated by a seismic source;

Figure 4A and 4B illustrate vertical and radial components of recorded data according to an embodiment;

Figure 5 is a schematic diagram illustrating up-going (primary) and down-going (ghost) S-waves and their polarizations according to an embodiment;

Figure 6 is a schematic diagram illustrating primary and ghost components according to an embodiment;

Figures 7-9 are flowcharts of a method for constraining a surface consistent inversion associated with a surface consistent amplitude correction according to an embodiment;

Figures 10A-10E are schematic diagrams depicting improvements according to an embodiment;

Figures 11-13 are flowcharts of methods for constraining a surface consistent inversion associated with a surface consistent amplitude correction according to embodiments;

Figure 14 is a schematic diagram of software components for constraining a surface consistent inversion associated with a surface consistent amplitude correction according to an embodiment; and

Figure 15 illustrates an exemplary data processing device or system which can be used to implement the embodiments.

## DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of performing surface consistent corrections in seismic data processing. However, the embodiments to be discussed next are not limited to these configurations, but may be extended to other arrangements as discussed later.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an embodiment, there is a method for surface consistent corrections based on inversion constraint. The method includes a step of receiving seismic data recorded with buried three-dimensional receivers. The seismic data includes both radial and vertical components. The method includes a step of transforming the radial and vertical components into primary and ghost components (or energy). The speed of the S-waves in the near-surface is determined by measuring time differences between the primary and ghost wave fields and geometric considerations associated with the S-waves, as discussed later. Refracted and/or reflected waves may be used for this determination.

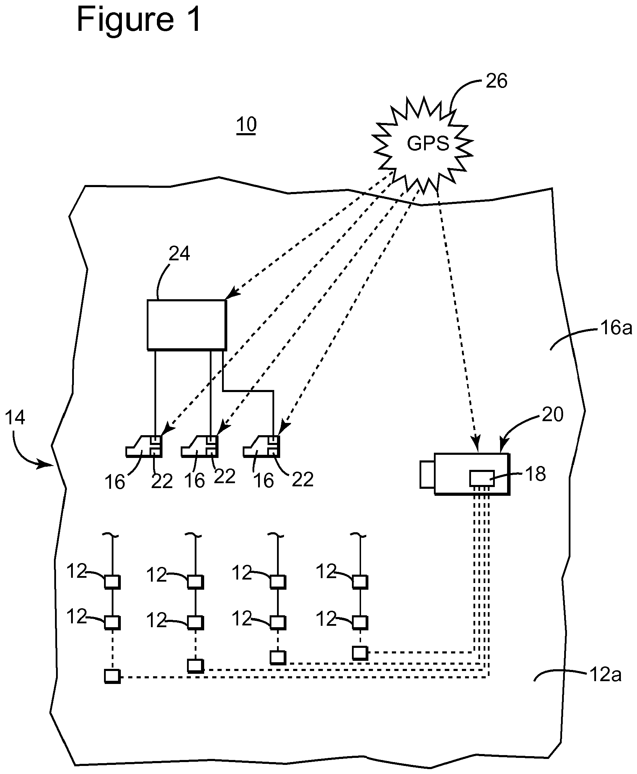

A configuration for achieving seismic monitoring is illustrated in Figure 1. Figure 1 shows a system 10 for the acquisition of seismic data. The system 10 includes plural receivers 12 positioned over an area 12a of a subsurface to be explored and in contact with the surface 14 of the ground. A number of vibroseismic sources 16 are also placed on the surface 14 in an area 16a, in a vicinity of the area 12a of the receivers 12. A recording device 18 is connected to the plurality of receivers 12 and placed, for example, in a station-truck 20. Each source 16 may be composed of a variable number of vibrators, typically between 1 and 5, and may include a local controller 22. A central controller 24 may be present to coordinate the shooting times of the sources 16. A GPS system 26 may be used to time-correlate the sources 16 and the receivers 12.

With this configuration, sources 16 are controlled to generate seismic waves, and the plurality of receivers 12 records waves reflected by the oil and/or gas reservoirs and other structures. The seismic survey may be repeated at various time intervals, e.g., months or years apart, to determine changes in the reservoirs. Although repeatability of source and receiver locations is generally easier to achieve onshore, the variations caused by changes in near-surface can be significantly larger than reservoir fluid displacement, making time-lapse 4D seismic acquisition and repeatability challenging. Thus, variations in seismic velocity in the near-surface are a factor that impacts repeatability of 4D surveys.

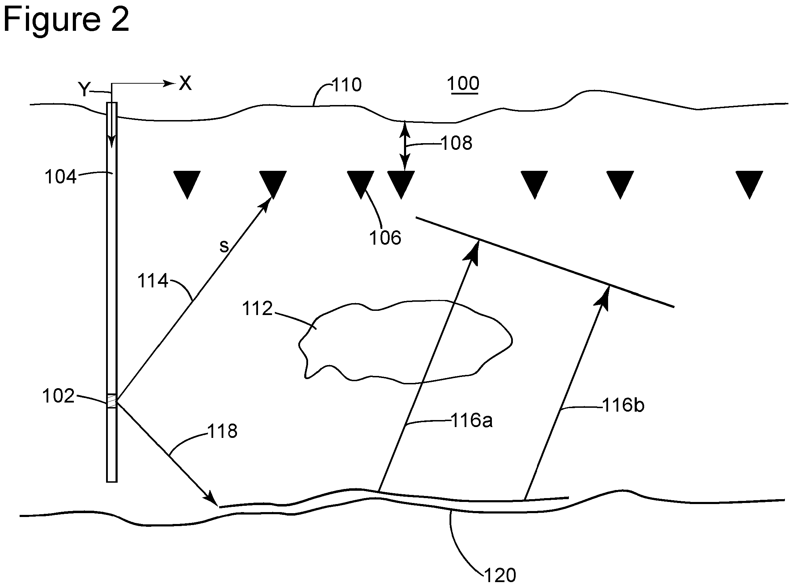

According to an embodiment illustrated in Figure 2, a seismic system 100 includes at least a seismic source 102 that might be provided in a well 104. The source may be any known source. For example, the source may be a SeisMovie source (developed by CGGVeritas, France) that includes piezoelectric vibrator elements that provide a wide bandwidth and high reliability/repeatability. A plurality of receivers 106 are buried at a predetermined depth 108 relative to a surface of the earth 110. The predetermined depth may be a distance larger than zero and smaller than the depth of the reservoir. In one embodiment, the predetermined depth is twelve meters. The receivers may be three-component (3C) geophones or 4C, i.e., a 3C geophone and a hydrophone. However, other three-component receivers may be used.

The reservoir or subsurface 112 to be monitored needs to be located at a depth larger than the depth of the receivers 106.

In an embodiment, the system 100 includes hundreds (e.g., 480) of 3C receivers buried at about twelve meters and tens (e.g., 11) of sources configured to continuously emitting seismic waves. The sources may be provided in the well (or multiple wells) at a depth of about eighty meters. The data may be recorded for tens of days, for example, eighty days. The data may be averaged to produce a single set. The data may be used to show that the acquisition system 100 and survey design are ideally suited to obtain estimates of S-wave attenuation for the top soil with high spatial resolution. The top soil (near-surface) is considered to be that portion of the ground that is above the receivers 106. This top soil is sometimes called the weathering layer.

As low S-wave velocities (large statics) and high absorption rates (low Q) within the weathering layer are considered to be among the main causes for reduced bandwidth and signal-to-noise of converted-wave (PS) data when compared to conventional P-wave (PP) data, an exemplary embodiment to be discussed next determines the primary and ghost components from measured vertical and radial components of the S-waves. As an extension to this embodiment, it is possible to correct for long wavelength and regional amplitude anomalies, which cannot be corrected by a conventional surface consistent amplitude flow. This algorithm may lead to more deterministic approaches for dealing with near-surface corrections in converted-wave processing.

The speed of the S-waves in the near surface, as discussed later in more detail, may be estimated from recording refracted S-waves. Figure 2 shows a direct S-wave 114, i.e., a wave that propagates from the source 102 directly to the receivers 106. Figure 2 also shows refracted S-waves 116a and 116b. The refracted S-waves 116a-b are a result of a down-going S-wave 118 that reaches a critical angle and gets refracted from a structure 120. It is noted that the direct S-wave 114 is recorded with a small offset (i.e., distance from the source to the receiver along X axis is small) while the refracted S-waves 116a-b are recorded with medium to large offsets.

To summarize, the embodiments for measuring near-surface attenuation use buried 3C receivers that measure the wave field at two instances. Any seismic energy that is reflected, refracted or generated at a depth below the buried receiver array is recorded first as it passes through the plurality of receivers while propagating toward the earth's surface. This up-going primary energy is then reflected down at the free surface (it is assumed that the reflection coefficient of the free surface is -1) and recorded a second time as it propagates back down into the earth. This later, secondary arrival includes down-going, or ghost, energy. Thus, based on this information, it is possible to estimate an effective measure of the Q-factor for the weathering layer, between the surface and the buried receivers, by applying the log-spectral ratio method on the primary and ghost wave fields. Before the Q-factor can be estimated it is, however, necessary to understand the nature and kinematics of the recorded S-waves, as well as to develop a method for separating them into their up-going and down-going parts. These aspects are discussed next.

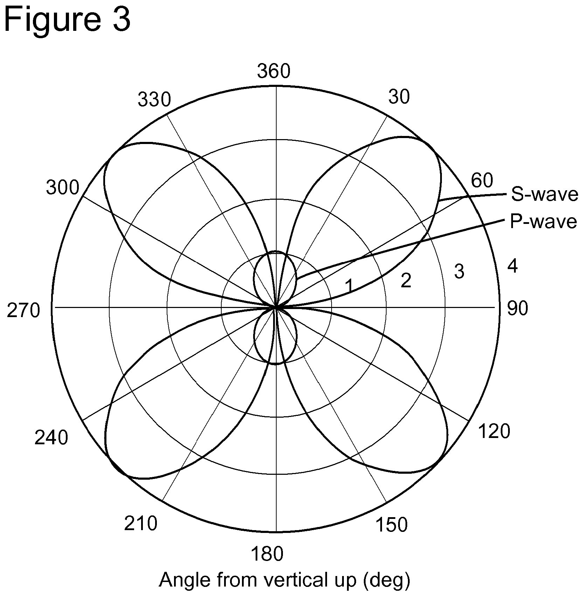

A possible seismic source to be used to generate the seismic waves in Figure 2 may be a dipole with a long axis oriented along a vertical Y direction. Dipole sources are highly directional and emit both P-waves and S-waves as shown in Figure 3. The radiation pattern is rotationally symmetric about the vertical axis. Maximum P-wave energy is emitted vertically while none is emitted horizontally. Maximum S-wave energy is emitted at a forty-five degree angle from vertical in both the upward and downward directions. No S-wave energy is emitted vertically or horizontally. Only Sv waves are generated and, overall, more S-wave energy is generated than P-wave energy. Upward- and downward-emitted energies have opposite polarities.

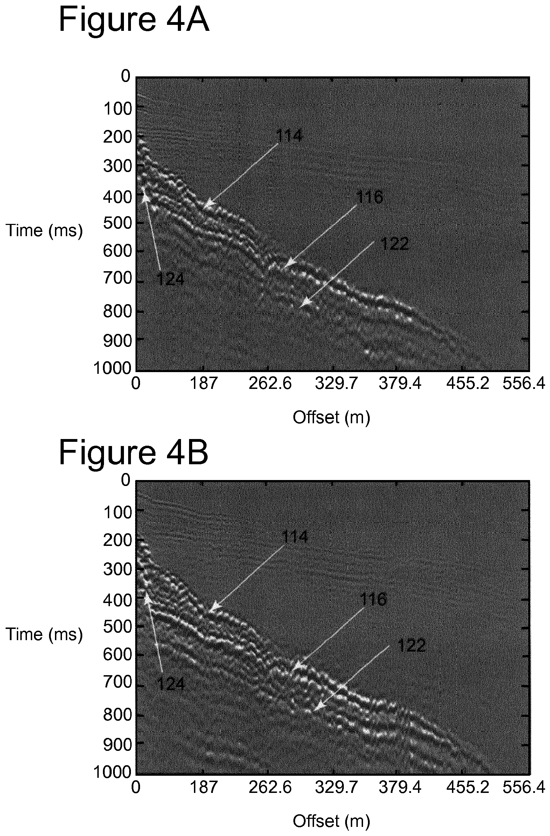

Representative vertical and radial component shot gathers calculated based on the data recorded by the receivers 106 and illustrated in Figures 4A and 4B show an abundance of coherent P-wave reflections as well as some coherent "first break" S-wave arrivals 114 and 116 that are followed mainly by incoherent or scattered S-wave noise. The lack of clear and abundant S-wave reflections is a consequence of the absence of vertically emitted S-waves in the source radiation pattern. The coherent first break S-wave event consists of two distinct arrivals. The first is the direct arrival from upward-emitted S-waves 114. The second one corresponds to the refracted S-waves 116a-b. The second arrival is due to the structure of the sources that emit most S-wave energy at forty-five degrees. Thus, it is expected that a large portion of the downward-emitted energy will reach critical angles at relatively limited offset and depth from the source. A structure 120 located below the sources is the possible candidate for producing the refraction S-waves 116a-b. Figures 4A and 4B also show the refracted ghost 122 and the direct ghost 124.

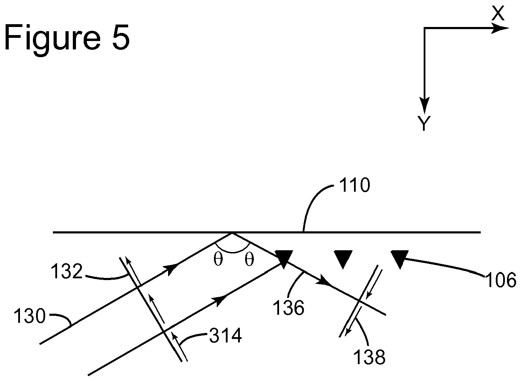

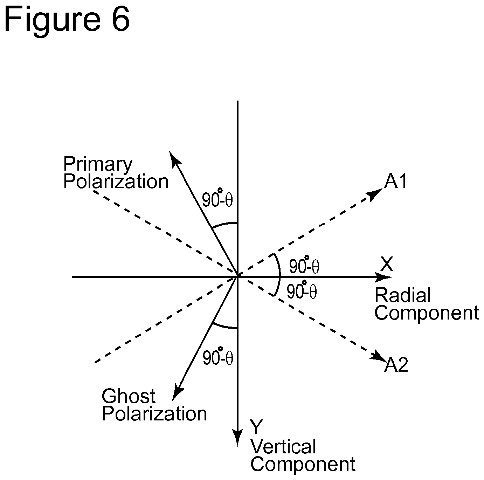

Having recorded the refracted S-waves (radial and vertical components) with the 3C receivers, the radial and vertical recorded components may be used to calculate primary and ghost components as discussed next. Figure 5 illustrates refracted S-waves 130 having a wave front 132 (plane waves) and a polarization 134 along the wave front 132. After reflection with angle θ on the surface 110, the ghost S-waves 136 has polarization 138. Figure 6 shows a relationship between the primary (130) and ghost (136) polarizations, relative to the X axis and Y axis, that correspond to the radial and vertical components, respectively.

With this seismic data having been acquired, the processing of the seismic data in a manner which corrects near-surface issues by constraining inversions for surface consistent corrections according to embodiments will now be discussed. Looking to the surface consistent model, the seismic amplitude Tij can be described as a combination of different factors, i.e., a source term $S_i$ and a receiver term $R_j$. Further, other terms can be added, i.e., a bin term $B_k$ and

an offset term $O_l$, giving the equation:

$$T_{ij} = (S_i)(R_j)(B_k)(O_l) \tag{1}$$

and accordingly, in the log domain the equation:

$$\log T_{ij} = \log (S_i) + \log (R_j) + \log (B_k) + \log (O_l). \tag{2}$$

From the log-based equation, a matrix can be built and because there are more unknowns than equations, a numerical solution, e.g., least squares, is evaluated

$$A^t A x = A^t t. \tag{3}$$

It should be noted in the described embodiments that although the amplitude is illustrated, any frequency dependent amplitude can be used for a data constrained surface consistent correction.

In a conventional surface consistent amplitude correction sequence, the system is solved where "t" contains the initial amplitudes, computed within a defined time window from the seismic traces, and the solution, x, contains the surface consistent scalars that are applied to the seismic traces at the end. In contrast, the embodiment provides for the identification of a target and, in general, the target is a time interval around a reflector on which amplitude anomalies cannot be corrected by a conventional surface consistent amplitude correction flow. A strong hypothesis on the targeted reflector is used, i.e., the reflector amplitude is considered either proportional to any provided attribute map (with an attribute comparable to a seismic amplitude), or constant (if a useful attribute map is neither available nor sufficiently reliable). It should be noted in the embodiment that for four-dimensional processing needs, the target is a time window used as a reference to adjust amplitudes between the different acquisition designs.

In the embodiment constrained Surface Consistent Amplitude Correction (SCAC) flow, amplitudes are first computed along the target and then two different inversions are computed. Continuing with the embodiment, the first inversion has a single purpose, the generation of an amplitude map that is used to constrain the second inversion. The second inversion of the embodiment is the inversion which provides the surface consistent scalars that are applied to the seismic traces. However, as will be discussed below, other techniques can be used to generate the data which is used to constrain the inversion which generates the surface consistent scalars.

The embodiments described above and below provide a solution to correct for wavelength and regional amplitude anomalies, which cannot be corrected by a conventional surface consistent amplitude flow. The described anomalies can come from a heterogeneous near surface or from buried velocity variations above the targeted horizons. The embodiment flow can be used to correct for amplitudes anomalies on various environments including but not limited to WZ in desert or permafrost, can introduce external constraints coming from seismic or non-seismic attributes such as but not limited to wells and can be used to adjust amplitudes between different acquisition vintages in four-dimensional processing or for merging different surveys.

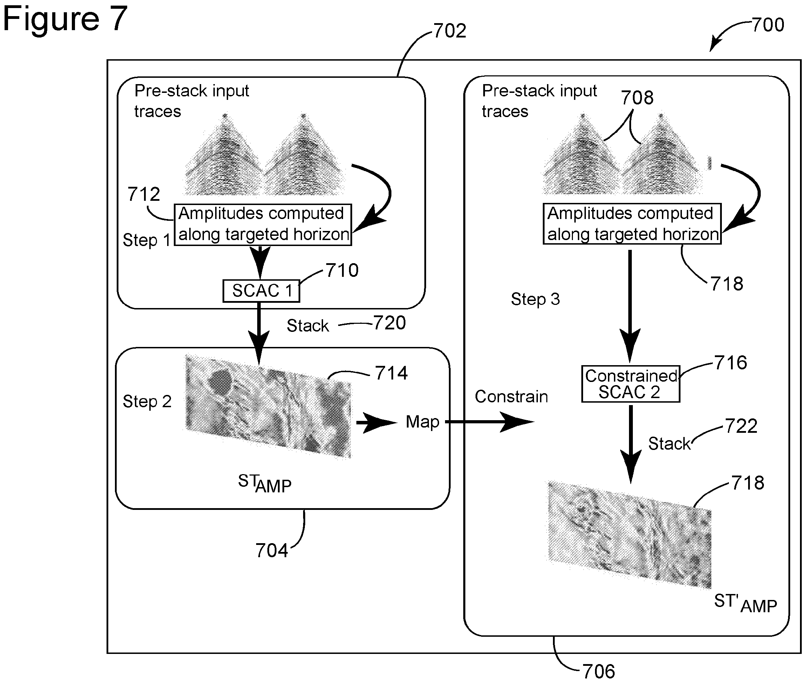

Looking to Figure 7 and a first step 702 associated with an embodiment 700, a first surface consistent amplitude correction flow 710 is performed. This step comprises designing a time window 712 on pre-stack seismic traces 708, from which initial amplitudes for inversion are computed, e.g., computation of $T_{AMP}(I, j)$ wherein the amplitude of input trace $t(i, j)$ around the targeted time window and corresponding to receiver i and source j. Further, the surface consistent general equations are resolved using two terms, i.e., a receiver term plus a source term. It should be noted in the embodiment that computation of terms other than the source and receiver terms is not required, e.g.:

$$T_{AMP}(i, j) = R_{AMP}(i) \, S_{AMP}(j) \tag{4}$$

wherein the surface consistent inversion is based on a computation of $R_{AMP}(i)$ and $S_{AMP}(j)$. Continuing, the surface consistent source and receiver scalars are applied to the initial pre-stack seismic traces 708 , e.g., the computed scalars, $R_{AMP}(i)$ and $S_{AMP}(j)$ are applied to the input traces $t(i, j)$ with the expression:

$$t_1(i, j) = t(i, j)/(R_{AMP}(i) \, S_{AMP}(j)) \tag{5}$$

to generate a first stack of corrected trace data 720.

In a second step 704 associated with an embodiment 700, an amplitude map 714 is created to constrain a second inversion. Note that in this, and other embodiments described herein a complete attribute (e.g., amplitude) map need not be used as an input. Sparser inputs, referred to herein as attribute scatters, may also or alternatively be used. The embodiment uses the stack of corrected traces generated by as part of the first step 702, e.g.:

$$st(k) = w \sum t_1(i, j) \tag{6}$$

with $k = (i + j) / 2$ and:

$$st(k) = w \sum (t(i, j) / (R_{AMP}(i) S_{AMP}(j))) \tag{7}$$

with $k = (i + j) / 2$, to compute an amplitude map 714 around the targeted time interval 712 on the stacked data 708, e.g.:

$$ST_{AMP}(k) = [st(k)]_{AMP} \tag{8}$$

with $k = (i + j) / 2$ and:

$$ST_{AMP}(k) = [w \sum (t(i, j) / (R_{AMP}(i) S_{AMP}(j)))]_{AMP} \tag{9}$$

with $k = (i + j) / 2$ and building an input amplitude map 714 by dividing a constant by the amplitude map 714, e.g.:

$$B_{AMP}(k) = 1 / ST_{AMP}(k) \tag{10}$$

to constrain the second inversion 716.

Looking now to a third step 706 associated with the embodiment 700, a second surface consistent amplitude correction flow 716 is performed. Continuing with embodiment step three 706, a time window is designed around the target time window 718 on the initial pre-stack seismic traces 708 from which initial amplitudes for inversion are computed 712, i.e., the same input as used in the first surface consistent amplitude correction flow 710. For example, the computation of $T_{AMP}(i, j)$, the amplitude of the input trace $t(i, j)$ around the target, corresponding to receiver "i" and source "j."

Next in the embodiment, the surface consistent general equations are resolved using three terms, i.e., a receiver term, a source term and a bin term. It should be noted in the embodiment that the receiver term and the source term are resolved but the bin term is extracted from the amplitude map created in the previous step. For example, the source/receiver/bin surface consistent model for the second pass, with fixed bin values is represented as:

$$T_{AMP}(i, j) = R'_{AMP}(i) S'_{AMP}(j) B'_{AMP}(k) \tag{11}$$

where $B'_{AMP}(k) = B_{AMP}(k)$ and the second surface consistent inversion provides the computation of $R'_{AMP}(i)$ and $S'_{AMP}(j)$. Continuing with the embodiment, the final source and receiver surface consistent scalars are applied to the initial seismic traces 708 to generate the final corrected trace $t_2(i, j)$, e.g., application of the computed scalars for $R'_{AMP}(i)$ and $S'_{AMP}(j)$ leads to the equation:

$$t_2(i, j) = t(i, j) / (R'_{AMP}(i) S'_{AMP}(j)) \tag{12}$$

to generate a second stack of corrected trace data 722. Finally, the amplitude on the targeted time window stacked data is closed to a constant value plus or minus the associated inversion errors, e.g., assuming $ST'_{AMP}(k)$ represents the amplitude of the stack of traces $t_2(i, j)$ around the target time window 718, then the equation is:

$$ST'_{AMP}(k) \approx B_{AMP}(k) ST_{AMP}(k) \tag{13}$$

where $B_{AMP}(k) = 1 / ST_{AMP}(k)$ therefore:

$$ST'_{AMP}(k) \approx 1 \tag{14}$$

It should be noted in the embodiment that the amplitude "AMP" can be, but is not limited to, an RMS amplitude or an average of absolute values or any other kind of amplitude computed within a time window, e.g.:

$$AMP(alpha.t) = |alpha|\ AMP(t) \tag{15}$$

In a variant of embodiment 700, a priori information can be used for building an amplitude map 714 instead of performing an initial inversion. Looking again to Figure 7, building an amplitude map 714 of a second step 704 that will constrain a surface consistent amplitude correction computation 716 can be performed using any attribute that can be assimilated to the amplitude along the targeted time interval, the aforementioned attribute can derive from either seismic or non-seismic data. For example, reflection coefficient data computed from well logs can be used to more accurately define a $B_{AMP}$ term associated with a second step 704 giving the equation:

$$B_{AMP}(k) = RC(k)\ /\ ST_{AMP}(k) \tag{16}$$

It should be noted in the embodiment that the stack of final traces, t2(i, j), around the target, $ST'_{AMP}(k)$, will approach the value of RC(k), plus or minus the inversion errors, as represented by the equation:

$$ST'_{AMP}(k) \approx RC(k). \tag{17}$$

Looking to another variant of embodiment 700, a different surface dependent decomposition 710, 716 can be performed. For example, additional terms, such as but not limited to an offset term, can be included in the surface consistent amplitude correction computation 710, 716.

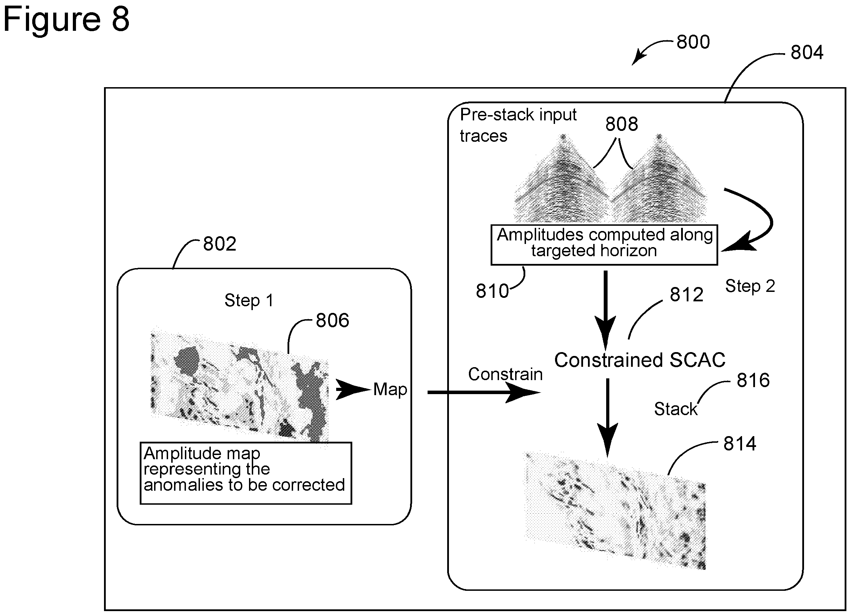

Looking to Figure 8 and a further variant of an embodiment 800, a simplified flow using only a single constrained inversion 812 is depicted. The embodiment 800 comprises two steps 802, 804 wherein an amplitude map 806 is constructed in a first step 802 and a constrained surface consistent amplitude correction computation 812 is performed in a second step 804. It should be noted in the embodiment 800 that any amplitude map 806 accurately representing the amplitude anomalies to be corrected on the target horizon can be used in the embodiment 800.

Looking to Figure 8 and a first step 802 of an embodiment 800, an amplitude map 806 is constructed by dividing a constant factor, e.g., 1, by an amplitude map representing the amplitude anomalies to be corrected. It should be noted in the embodiment 800 that the amplitude map 806 computation can be represented by the equation:

$$B_{AMP}(k) = 1\ /\ MAP_{AMP}(k) \tag{18}$$

wherein $MAP_{AMP}(k)$ is an amplitude map accurately representing the amplitude anomalies to be corrected.

Continuing with a second step 804 of an embodiment 800, a constrained surface consistent amplitude correction computation 812 is performed. The second step 804 of the embodiment 800 comprises designing a time window around the targeted time interval 810 of the associated pre-stack seismic traces 808. For example, the computation of $T_{AMP}$(i, j) comprises the amplitude of input trace t(i, j) 808 around the target horizon corresponding to receiver "i" and source "j." Continuing with aspects of the second step 804 of the embodiment, the surface consistent general equations are resolved using three terms, i.e., a receiver term, a source term and a bin term. It should be noted in the embodiment that the receiver term and the source term are resolved but the bin term is not resolved but is extracted from the amplitude map created in the previous step. For example, the source/receiver/bin surface consistent model, with fixed bin values is represented as:

$$T_{AMP}(i, j) = R_{AMP}(i)\ S_{AMP}(j)\ B_{AMP}(k) \tag{19}$$

where $B_{AMP}(k) = 1\ /\ MAP_{AMP}(k)$ and the surface consistent inversion provides the computation of $R_{AMP}(i)$ and $S_{AMP}(j)$. Continuing with the second step 804 of the embodiment 800, the surface consistent source and receiver scalars are applied to the input seismic traces 808, e.g., the computed scalars $R_{AMP}(i)$ and $S_{AMP}(j)$ are used in the equation:

$$t_{CORRECTION}(i, j) = t(i, j) / (R_{AMP}(i) S_{AMP}(j)) \qquad (20)$$

to generate a stack of corrected trace data 816.

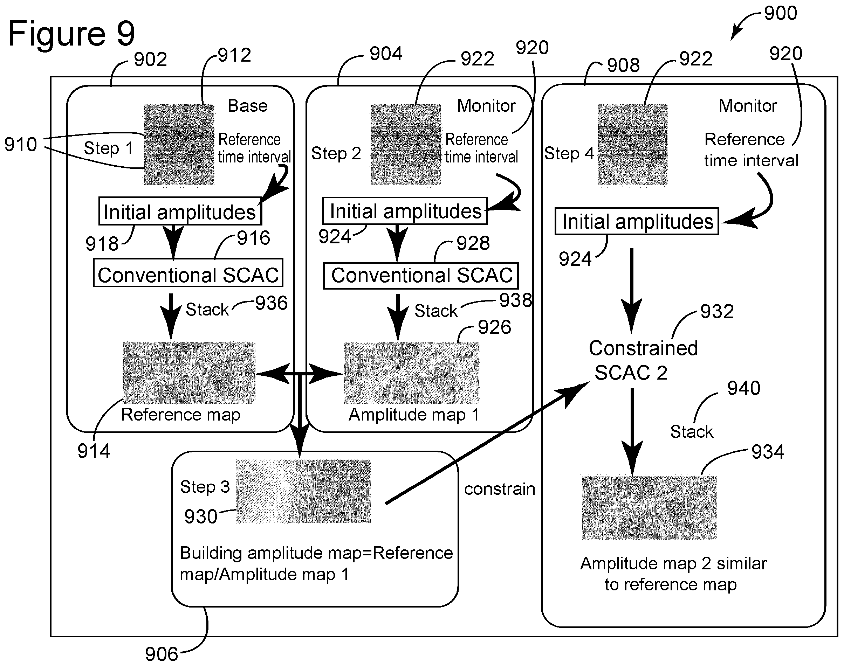

Looking now to Figure 9 and another variant of an embodiment 900, a constrained surface consistent amplitude correction inversion for a four-dimensional (4D) seismic dataset is depicted. A first step 902 of an embodiment 900 comprises selecting a time interval 910 on a dataset of seismic base data 912, i.e., identifying initial amplitudes 918, and generating a reference amplitude map 914 based on performing a surface consistent amplitude correction 916 of the initial amplitudes 918 of the seismic base data 912 and applying the surface consistent base source and receiver scalars to the seismic base data 912 to generate a base stack of corrected seismic base trace data 936. Continuing with a second step 904 of the embodiment 900, comprises selecting a time interval 920 on a dataset of seismic monitor data 922, i.e., identifying initial amplitudes 924, and generating a first amplitude map 926 based on performing a surface consistent amplitude correction 928 of the initial amplitudes 924 of the seismic monitor data 922 and applying the surface consistent monitor source and receiver scalars to the seismic monitor data 922 to generate a monitor stack of corrected seismic monitor trace data 938.

Looking now to a third step 906 of the embodiment 900, the reference amplitude map 914 and the first amplitude map 926 are used to compute a combined amplitude map 930 by dividing the reference amplitude map 914 by the first amplitude map 926. Continuing with a fourth step 908 of the embodiment 900, a constrained surface consistent amplitude correction 932 is performed on the initial amplitudes 924 of the seismic monitor data 922 to generate a second amplitude map 934 based on applying corrections associated with the combined amplitude map 930 by applying the surface consistent constrained source and receiver scalars to the seismic monitor data 922 to generate a second stack of corrected seismic monitor trace data 940. It should be noted in the previously described embodiments and variants of embodiments that pre-conditioning on the input map, comprising smoothing, filtering, editing, interpolation and extrapolation data can be performed. It should further be noted that the embodiments can be extended to any surface consistent attribute that can be decomposed into the same surface consistent model.

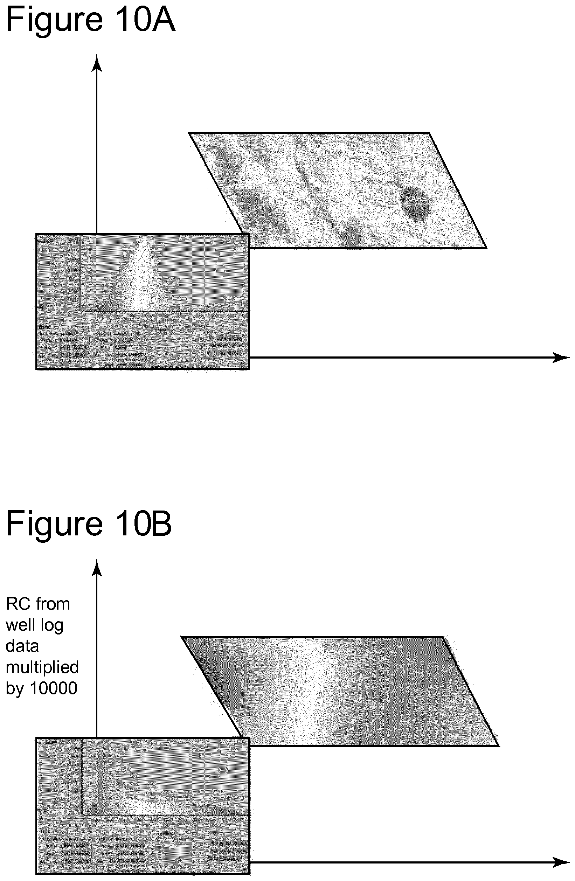

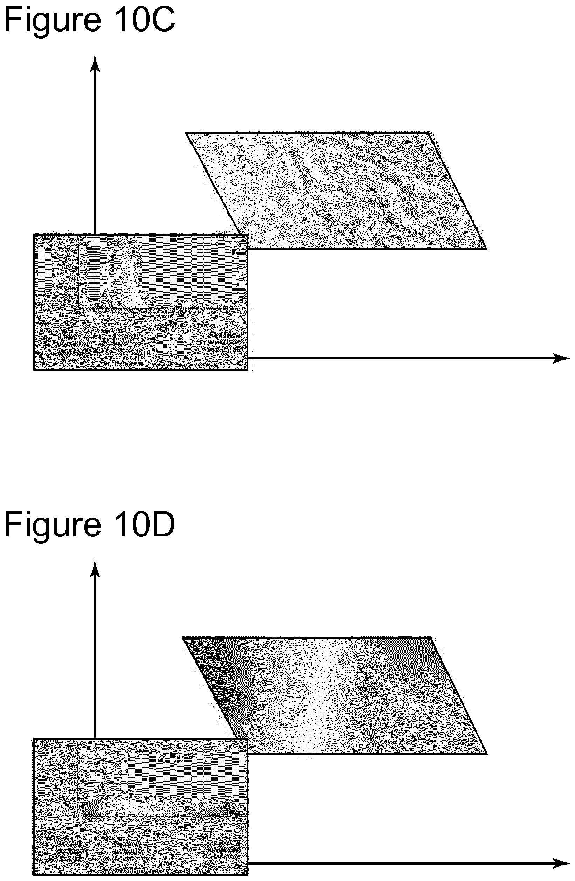

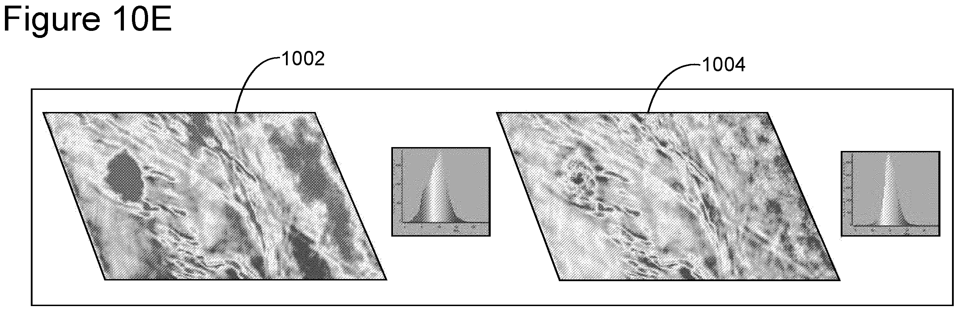

Looking now to Figures 10A, 10B, 10C, 10D and 10E, a series of seismic images illustrate the advantages of the application of an embodiment. Beginning with Figure 10A, a seismic image depiction of raw amplitude along a horizon where reflection coefficient variations are known to be small, i.e., plus or minus twenty-five percent. Next, Figure 10B depicts a reflectivity map, extracted from well logs. Looking now to Figure 10C, an embodiment constrained inversion has been applied and the seismic image shows that the amplitude variability of the depicted horizon is dramatically reduced. It should be noted in the embodiment application that the background variation is directly relative to the reflectivity variation from the well log data, while high frequency variations are relative to geological features such as, but not limited to, faults. Turning now to Figure 10D, depicted are the low frequency components of the post inversion amplitude map of Figure 10C and it is illustrated that the low frequency filtered map matches the reflectivity map of Figure 10B. Looking to Figure 10E, benefits of the embodiments are illustrated wherein the long wavelengths that appear on the initial dataset 1002 have successfully been removed after performing data-constrained surface consistent amplitude correction 1004 without removing the high frequency amplitude variations related to geology.

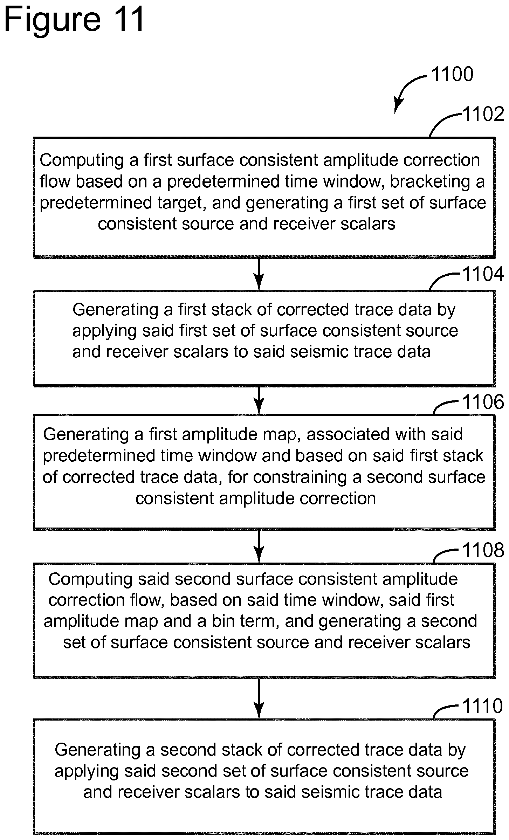

Looking now to Figure 11, a method embodiment 1100 of constraining wavelength components of a surface consistent inversion associated with a surface consistent amplitude correction of seismic trace data is depicted. Starting at step 1102, the method embodiment 1100 computes a first surface consistent amplitude correction flow based on a predetermined time window. It should be noted in the embodiment that the time window brackets a predetermined target. Further in embodiment step 1102, a first set of surface consistent source and receiver scalars are generated. Looking next to step 1104 of the method embodiment 1100, a first stack of corrected trace data are generated after applying the first set of surface consistent source and receiver scalars to the seismic trace data.

Continuing at step 1106 of the method embodiment 1100, a first amplitude map is generated for constraining a second surface consistent amplitude correction. It should be noted in the method embodiment 1100 that the first amplitude map is associated with the predetermined time window and based on the first stack of corrected trace data. Next at step 1108 of the method embodiment 1100, a second surface consistent amplitude correction flow is computed. It should be noted in the embodiment 1100 that the second surface consistent amplitude correction flow is based on the time window, the first amplitude map and a bin term. Further, the step 1108 generates a second set of source and receiver scalars. Next at step 1110 of the method embodiment 1100, a second stack of corrected stack trace data is generated by applying the second set of surface consistent source and receiver scalars to the seismic trace data.

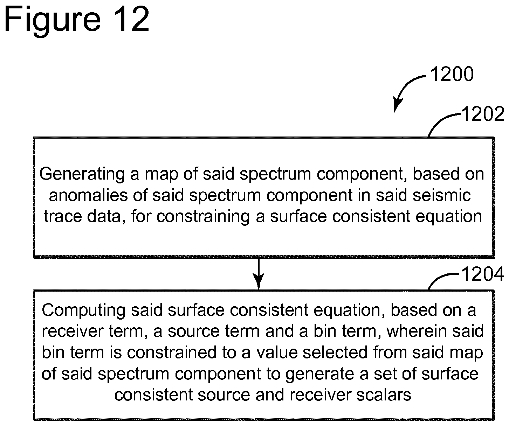

Looking now to Figure 12, another method embodiment 1200 of constraining wavelength components of a surface consistent inversion associated with a surface consistent amplitude correction of seismic trace data is depicted. Starting at step 1202, the method embodiment 1200 generates an amplitude map, associated with a predetermined time window and based on accurately representing amplitude anomalies, for constraining a surface consistent amplitude correction.

Next, at step 1204 of the method embodiment 1200, a surface consistent amplitude correction flow is computed and a set of surface consistent source and receiver scalars are generated. It should be noted in the method embodiment 1200 that the computation is based on the time window, the amplitude map and a bin term.

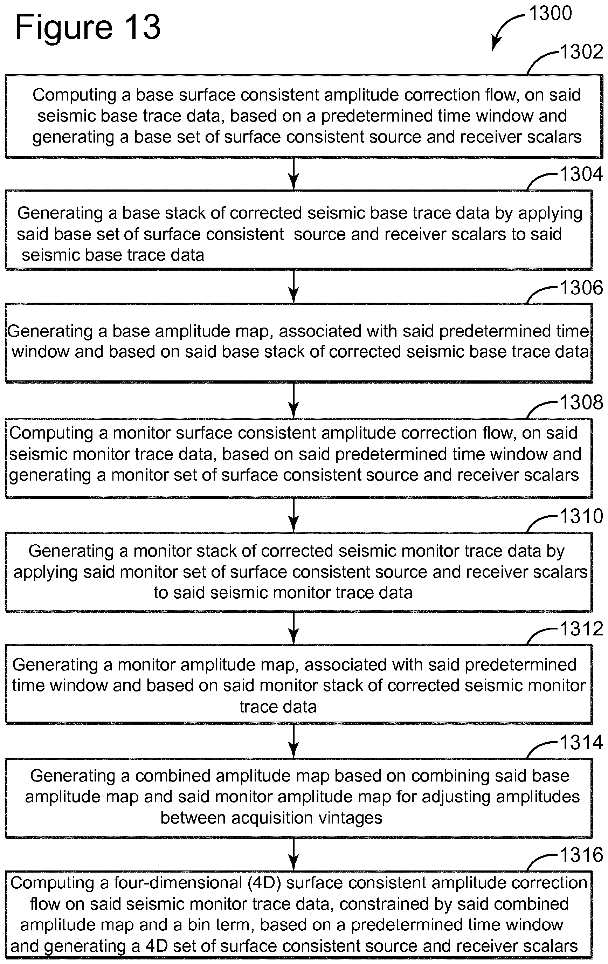

Looking now to Figure 13, another method embodiment 1300 of constraining wavelength components of a surface consistent inversion associated with a surface consistent amplitude correction of seismic trace data is depicted. Beginning with step 1302 of the method embodiment 1300, a surface consistent amplitude correction flow is computed for a seismic base trace dataset. It should be noted in the method embodiment 1300 that the surface consistent amplitude correction computation is based on a predetermined time window and generates a set of surface consistent source and receiver scalars based on the seismic base trace dataset.

Next at step 1304 of the method embodiment 1300, a base stack of corrected seismic base trace data is generated by applying the previously generated base surface consistent source and receiver scalars to the seismic base trace data. Continuing with step 1306 of the method embodiment 1300, a base amplitude map is generated based on the previously generated stack of corrected seismic base trace data. It should be noted in the method embodiment 1300 that the base amplitude map is associated with the predetermined time window.

Continuing with step 1308 of the method embodiment 1300, a second surface consistent amplitude correction flow computation is performed on a second seismic trace dataset of seismic monitor trace data. It should be noted in the method embodiment 1300 that the monitor surface consistent amplitude correction flow is also based on the predetermined time window and generates a monitor set of surface consistent source and receiver scalars. Next at step 1310 of the method embodiment 1300, a monitor stack of corrected seismic monitor trace data is generated by applying the previously generated monitor surface consistent source and receiver scalars to the seismic monitor trace data.

Continuing with step 1312 of the method embodiment 1300, a monitor amplitude map is generated based on the previously generated stack of corrected seismic monitor trace data. It should be noted in the method embodiment 1300 that the monitor amplitude map is associated with the predetermined time window.

Next at step 1314 of the method embodiment 1300, a combined amplitude map is generated based on combining the base amplitude map and the monitor amplitude map. It should be noted in the method embodiment 1300 that the combined amplitude map is used to adjust the amplitude differences between the two different vintages of amplitude maps.

Continuing with step 1316 of the method embodiment 1300, a 4D surface consistent amplitude correction flow is computed on the seismic monitor data. It should be noted in the method embodiment 1300 that 4D surface consistent amplitude correction flow computation is constrained by the combined amplitude map and a bin term. It should further be noted in the method embodiment 1300 that the combined amplitude map is associated with the predetermined time window and generates a set of 4D surface consistent source and receiver scalars.

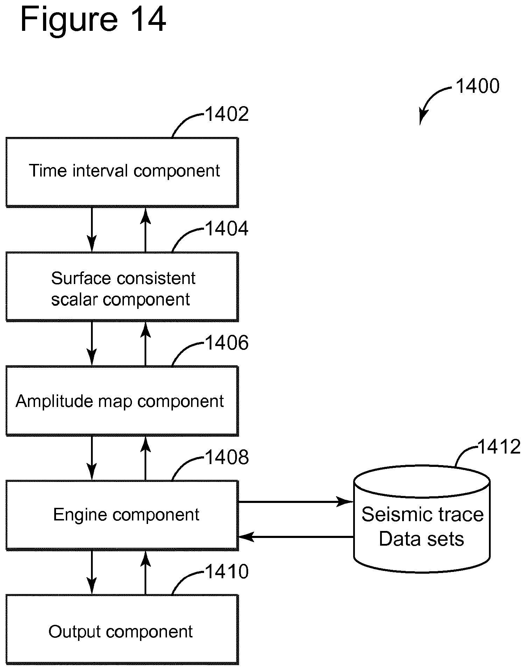

Looking now to Figure 14, a schematic diagram of an embodiment node 1400 for generating a corrected amplitude map based on constraining wavelength components of a surface consistent inversion is depicted. The embodiment node 1400 comprises a time interval component 1402, a surface consistent scalar component 1404, an amplitude map component 1406, an engine component 1408, an output component 1410 and one or more seismic trace datasets 1412. Continuing with the embodiment node, the time interval component 1402 provides the ability to design a computational time window around a portion of the applicable datasets.

Next in the embodiment node 1400, the surface consistent scalar component 1404 provides the ability to calculate surface consistent source and receiver scalars based on a surface consistent amplitude correction computation associated with one or more seismic trace datasets. Continuing with the embodiment node 1400, the amplitude map component provides the capability to generate amplitude maps based on the previously determined surface consistent source and receiver scalars and one or more of the seismic trace datasets. It should be noted in the embodiment node 1400 that amplitude maps can also be generated based on combining previously generated amplitude maps.

Continuing with the embodiment node 1400, an engine component 1408 provides the capability to apply the amplitude maps to the seismic trace datasets. It should be noted in the embodiment node 1400 that the amplitude maps can be generated based on computations associated with the seismic trace datasets or the amplitude maps can be constructed from data representing the anomalies to be corrected. It should further be noted in the embodiment node 1400 that the engine component provides access to the seismic trace datasets.

Next in the embodiment node 1400, the output component 1410 provides the capability to output a corrected amplitude map. It should be noted in the embodiment node 1400 that the output component can also output stacks of corrected trace data and sets of surface consistent source and receiver scalars.

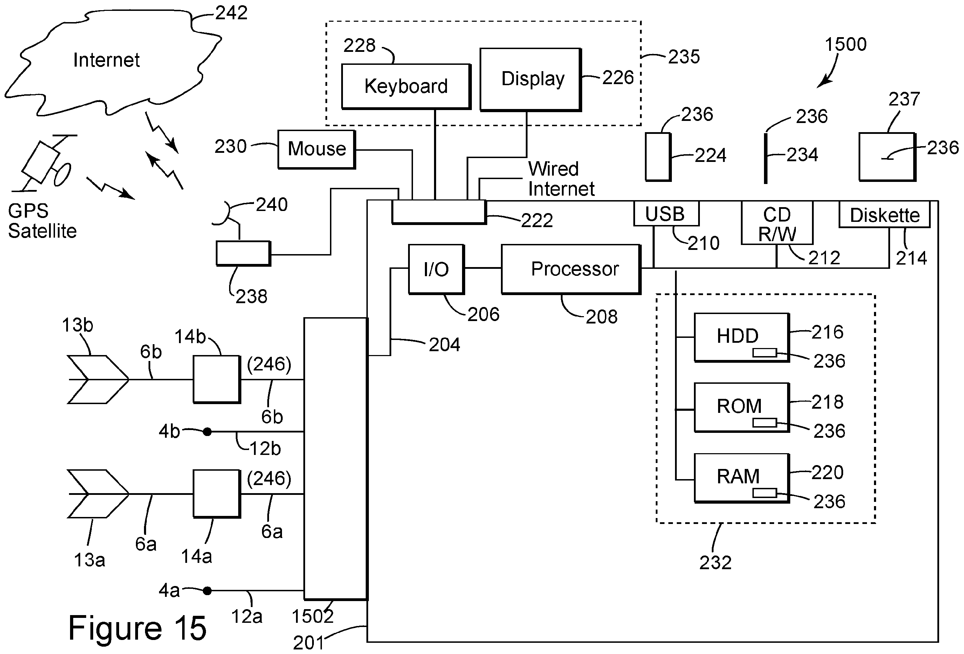

The computing device(s) or other network nodes involved in ghost compensated modeled seismic image prediction as set forth in the above described embodiments may be any type of computing device capable of processing and communicating seismic data associated with a seismic survey. An example of a representative computing system capable of carrying out operations in accordance with these embodiments is illustrated in Figure 15. System 1500 includes, among other items, server 201, source/receiver interface 1502, internal data/communications bus (bus) 204, processor(s) 208 (those of ordinary skill in the art can appreciate that in modern server systems, parallel processing is becoming increasingly prevalent, and whereas a single processor would have been used in the past to implement many or at least several functions, it is more common currently to have a single dedicated processor for certain functions (e.g.,

digital signal processors) and therefore could be several processors, acting in serial and/or parallel, as required by the specific application), universal serial bus (USB) port 210, compact disk (CD)/digital video disk (DVD) read/write (R/W) drive 212, floppy diskette drive 214 (though less used currently, many servers still include this device), and data storage unit 232.

Data storage unit 232 itself can comprise hard disk drive (HDD) 216 (these can include conventional magnetic storage media, but, as is becoming increasingly more prevalent, can include flash drive-type mass storage devices 224, among other types), ROM device(s) 218 (these can include electrically erasable (EE) programmable ROM (EEPROM) devices, ultra-violet erasable PROM devices (UVPROMs), among other types), and random access memory (RAM) devices 220. Usable with USB port 210 is flash drive device 224, and usable with CD/DVD R/W device 212 are CD/DVD disks 234 (which can be both read and write-able). Usable with diskette drive device 214 are floppy diskettes 237. Each of the memory storage devices, or the memory storage media (216, 218, 220, 224, 234, and 237, among other types), can contain parts or components, or in its entirety, executable software programming code (software) 236 that can implement part or all of the portions of the method described herein. Further, processor 208 itself can contain one or different types of memory storage devices (most probably, but not in a limiting manner, RAM memory storage media 220) that can store all or some of the components of software 236.

In addition to the above described components, system 200 also comprises user console 234, which can include keyboard 228, display 226, and mouse 230. All of these components are known to those of ordinary skill in the art, and this description includes all known and future variants of these types of devices. Display 226 can be any type of known display or presentation screen, such as liquid crystal displays (LCDs), light emitting diode displays (LEDs), plasma displays, cathode ray tubes (CRTs), among others. User console 235 can include one or more user interface mechanisms such as a mouse, keyboard, microphone, touch pad, touch screen, voice-recognition system, among other inter-active inter-communicative devices.

User console 234, and its components if separately provided, interface with server 201 via server input/output (I/O) interface 222, which can be an RS232, Ethernet, USB or other type of communications port, or can include all or some of these, and further includes any other type of communications means, presently known or further developed. System 200 can further include communications satellite/global positioning system (GPS) transceiver device 238, to which is electrically connected at least one antenna 240 (according to an exemplary embodiment, there would be at least one GPS receive-only antenna, and at least one separate satellite bi-directional communications antenna). System 200 can access internet 242, either through a hard wired connection, via I/O interface 222 directly, or wirelessly via antenna 240, and transceiver 238.

Server 201 can be coupled to other computing devices, such as those that operate or control the equipment of ship 2, via one or more networks. Server 201 may be part of a larger network configuration as in a global area network (GAN) (e.g., internet 242), which ultimately allows connection to various landlines.

According to a further exemplary embodiment, system 200, being designed for use in seismic exploration, will interface with one or more sources 4a,b and one or more receivers 14. These, as previously described, are attached to streamers 6a,b, to which are also attached birds 13a,b that are useful to maintain positioning. As further previously discussed, sources 4 and receivers 14 can communicate with server 201 either through an electrical cable that is part of streamer 6, or via a wireless system that can communicate via antenna 240 and transceiver 238 (collectively described as communications conduit 246).

According to further exemplary embodiments, user console 235 provides a means for personnel to enter commands and configuration into system 200 (e.g., via a keyboard, buttons, switches, touch screen and/or joy stick). Display device 226 can be used to show: streamer 6 position; visual representations of acquired data; source 4 and receiver 14 status information; survey information; and other information important to the seismic data acquisition process. Source and receiver interface unit 202 can receive the hydrophone seismic data from receiver 14 though streamer communication conduit 248 (discussed above) that can be part of streamer 6, as well as streamer 6 position information from birds 13; the link is bi-directional so that commands can also be sent to birds 13 to maintain proper streamer positioning. Source and receiver interface unit 202 can also communicate bi-directionally with sources 4 through the streamer communication conduit 248 that can be part of streamer 6. Excitation signals, control signals, output signals and status information related to source 4 can be exchanged by streamer communication conduit 248 between system 200 and source 4.

Bus 204 allows a data pathway for items such as: the transfer and storage of data that originate from either the source sensors or streamer receivers; for processor 208 to access stored data contained in data storage unit memory 232; for processor 208 to send information for visual display to display 226; or for the user to send commands to system operating programs/software 236 that might reside in either the processor 208 or the source and receiver interface unit 202.

System 200 can be used to implement the methods described above associated with ghost compensated modeled seismic image prediction according to an exemplary embodiment. Hardware, firmware, software or a combination thereof may be used to perform the various steps and operations described herein. According to an exemplary embodiment, software 236 for carrying out the above discussed steps can be stored and distributed on multi-media storage devices such as devices 216, 218, 220, 224, 234, and/or 237 (described above) or other form of media capable of portably storing information (e.g., universal serial bus (USB) flash drive 426). These storage media may be inserted into, and read by, devices such as the CD-ROM drive 414, the disk drive 412, among other types of software storage devices.

**Claims**

1. A method for constraining a surface consistent equation associated with a correction of wavelengths having a surface consistent seismic attribute, said method being **characterised by** comprising:

   receiving (808) pre-stack seismic traces associated with a surveyed subsurface;
   generating a map or scatter (806) of said attribute, based on a priori knowledge of said attribute from seismic trace data and on anomalies of said attribute in said seismic trace data, for constraining a surface consistent equation;
   computing said surface consistent equation (812), based on a receiver term, a source term and a bin term, wherein said bin term is constrained to a value selected from said map or scatter of said attribute, to generate a set of surface consistent source and receiver scalars;
   applying (816) said set of surface consistent source and receiver scalars to the pre-stack seismic traces to generate a stack of corrected trace data; and
   generating a seismic image of the subsurface based on said stack of corrected trace data.

2. The method of claim 1, wherein said step of generating a map of the attribute further comprises:
   dividing a map of expected values by said map of said attribute wherein said map of said attribute represents anomalies of said attribute to be corrected.

3. The method of claim 2 wherein said map of expected values is constant.

4. The method of claim 3, wherein said constant is one.

5. The method of claim 1, wherein an additional term comprising an offset term can be included in said surface consistent attribute correction.

6. The method of claim 1, wherein said attribute is amplitude.

7. The method of claim 1, wherein the step of computing further comprises:

   computing a first surface consistent amplitude correction (710) flow based on a predetermined time window, bracketing a predetermined target (712), and generating a first set of surface consistent source and receiver scalars;
   generating a first stack of corrected trace data (720) after applying said first set of surface consistent source and receiver scalars to said seismic trace data (708) ;
   generating a first amplitude map (714), associated with said predetermined time window and based on said first stack of corrected trace data (720), for constraining a second surface consistent amplitude correction (716); and
   computing said second surface consistent amplitude correction (716) flow, based on said time window, said first amplitude map (714) and a bin term, and
   generating a second set of surface consistent source and receiver scalars.

8. The method of claim 1, wherein the step of computing further comprises:

   computing a base surface consistent amplitude correction (916) flow, on said seismic base trace data (912), based on a predetermined time window and generating a base set of surface consistent source and receiver scalars;
   generating a base stack of corrected seismic base trace data (936) by applying said base set of surface consistent source and receiver scalars to said seismic base trace data (912);
   generating a base amplitude map (914), associated with said predetermined time window and based on said base stack of corrected seismic base trace data (936);

computing a monitor surface consistent amplitude correction (928) flow, on said seismic monitor trace data (922), based on said predetermined time window and generating a monitor set of surface consistent source and receiver scalars;

generating a monitor stack of corrected seismic monitor trace data (938) by applying said monitor set of surface consistent source and receiver scalars to said seismic monitor trace data (922);

generating a monitor amplitude map (926), associated with said predetermined time window and based on said monitor stack of corrected seismic monitor trace data (938);

generating a combined amplitude map (930) based on combining said base amplitude map (914) and said monitor amplitude map (926) for adjusting amplitudes between acquisition vintages;

computing a four-dimensional (4D) surface consistent amplitude correction (932) flow on said seismic monitor trace data (922), constrained by said combined amplitude map (930) and a bin term, based on a predetermined time window and generating a 4D set of surface consistent source and receiver scalars;

generating a 4D stack of corrected seismic monitor trace data (940) by applying said 4D set of surface consistent source and receiver scalars to said seismic monitor trace data (922); and

generating a 4D amplitude map (934), associated with said predetermined time window and based on said 4D stack of corrected seismic monitor trace data (922).

9. A system for processing seismic data by constraining a surface consistent equation associated with a correction of wavelengths having a surface consistent seismic attribute, said system being **characterised by** comprising:

a memory device (220) configured to store pre-stack seismic data associated with a surveyed subsurface; and one or more processors (208) configured to

receive the pre-stack seismic data and to generate a map or scatter (806) of said attribute, based on a priori knowledge of said attribute from the seismic trace data and on anomalies of said attribute in said seismic trace data, for constraining a surface consistent equation;

compute said surface consistent equation (812), based on a receiver term, a source term and a bin term, wherein said bin term is constrained to a value selected from said map or scatter of said attribute, to generate a set of surface consistent source and receiver scalars;

apply said set of surface consistent source and receiver scalars to the pre-stack seismic traces to generate a stack of corrected trace data; and

generate a seismic image of the subsurface based on said stack of corrected trace data.

10. The system of claim 9, wherein said one or more processors are further configured to divide a map of expected values by said map of said attribute wherein said map of said attribute represents anomalies of said attribute to be corrected.

11. The system of claim 10 wherein said map of expected values is constant.

12. The system of claim 11, wherein said constant is one.

13. The system of claim 9, wherein an additional term comprising an offset term can be included in said surface consistent attribute correction.

**Patentansprüche**

1. Verfahren zur Beschränkung einer oberflächenkonsistenten Gleichung, die mit einer Korrektur von Wellenlängen mit einem oberflächenkonsistenten seismischen Attribut assoziiert ist, wobei das Verfahren **dadurch gekennzeichnet ist, dass** es umfasst:

Empfangen (808) von seismischen Vor-Stapel-Spuren, die mit einem untersuchten Untergrund assoziiert sind; Erzeugen einer Karte oder Verteilung (806) des Attributs basierend auf einer A-priori-Kenntnis des Attributs aus seismischen Spurendaten und auf Anomalien des Attributs in den seismischen Spurendaten zum Beschränken einer oberflächenkonsistenten Gleichung;

Berechnen der oberflächenkonsistenten Gleichung (812) basierend auf einem Empfängerterm, einem Quellenterm und einem Bin-Term, wobei der Bin-Term auf einen Wert beschränkt wird, der aus der Karte oder Verteilung des Attributs ausgewählt wird, um einen Satz von oberflächenkonsistenten Quellen- und Empfängerskalaren zu erzeugen;

Anwenden (816) des Satzes von oberflächenkonsistenten Quellen- und Empfängerskalaren auf die seismischen Vor-Stapel-Spuren, um einen Stapel von korrigierten Spurendaten zu erzeugen; und

Erzeugen eines seismischen Bildes des Untergrunds basierend auf dem Stapel von korrigierten Spurendaten.

2. Verfahren nach Anspruch 1, wobei der Schritt des Erzeugens einer Karte des Attributs ferner umfasst:

Teilen einer Karte von erwarteten Werten durch die Karte des Attributs, wobei die Karte des Attributs Anomalien des zu korrigierenden Attributs darstellt.

3. Verfahren nach Anspruch 2, wobei die Karte von erwarteten Werten konstant ist.

4. Verfahren nach Anspruch 3, wobei die Konstante eins ist.

5. Verfahren nach Anspruch 1, wobei ein zusätzlicher Term, der einen Offset-Term umfasst, in die oberflächenkonsistente Attributkorrektur einbezogen werden kann.

6. Verfahren nach Anspruch 1, wobei das Attribut Amplitude ist.

7. Verfahren nach Anspruch 1, wobei der Schritt des Berechnens ferner umfasst:

Berechnen eines ersten Flusses von oberflächenkonsistenter Amplitudenkorrektur (710) basierend auf einem vorbestimmten Zeitfenster, In-Klammer-setzen eines vorbestimmten Ziels (712) und Erzeugen eines ersten Satzes von oberflächenkonsistenten Quellen- und Empfängerskalaren;

Erzeugen eines ersten Stapels von korrigierten Spurendaten (720) nach dem Anwenden des ersten Satzes von oberflächenkonsistenten Quellen- und Empfängerskalaren auf die seismischen Spurendaten (708);

Erzeugen einer ersten Amplitudenkarte (714), die mit dem vorbestimmten Zeitfenster assoziiert ist und auf dem ersten Stapel von korrigierten Spurendaten (720) basiert, zum Beschränken einer zweiten oberflächenkonsistenten Amplitudenkorrektur (716); und

Berechnen des zweiten Flusses von oberflächenkonsistenter Amplitudenkorrektur (716) basierend auf dem Zeitfenster, der ersten Amplitudenkarte (714) und einem Bin-Term und

Erzeugen eines zweiten Satzes von oberflächenkonsistenten Quellen- und Empfängerskalaren.

8. Verfahren nach Anspruch 1, wobei der Schritt des Berechnens ferner umfasst:

Berechnen eines Basisflusses von oberflächenkonsistenter Amplitudenkorrektur (916) an den seismischen Basisspurendaten (912) basierend auf einem vorbestimmten Zeitfenster und Erzeugen eines Basissatzes von oberflächenkonsistenten Quellen- und Empfängerskalaren;

Erzeugen eines Basisstapels von korrigierten seismischen Basisspurendaten (936) durch Anwenden des Basissatzes von oberflächenkonsistenten Quellen- und Empfängerskalaren auf die seismischen Basisspurendaten (912);

Erzeugen einer Basisamplitudenkarte (914), die mit dem vorbestimmten Zeitfenster assoziiert ist und auf dem Basisstapel von korrigieren seismischen Basisspurendaten (936) basiert;

Berechnen eines Überwachungsflusses von oberflächenkonsistenter Amplitudenkorrektur (928) an den seismischen Überwachungsspurendaten (922) basierend auf dem vorbestimmten Zeitfenster und Erzeugen eines Überwachungssatzes von oberflächenkonsistenten Quellen- und Empfängerskalaren;

Erzeugen eines Überwachungsstapels von korrigierten seismischen Überwachungsspurendaten (938) durch Anwenden des Überwachungssatzes von oberflächenkonsistenten Quellen- und Empfängerskalaren auf die seismischen Überwachungsspurendaten (922);

Erzeugen einer Überwachungsamplitudenkarte (926), die mit dem vorbestimmten Zeitfenster assoziiert ist und auf dem Überwachungsstapel von korrigierten seismischen Überwachungsspurendaten (938) basiert;

Erzeugen einer kombinierten Amplitudenkarte (930) basierend auf einem Kombinieren der Basisamplitudenkarte (914) und der Überwachungsamplitudenkarte (926) zum Anpassen von Amplituden zwischen Erfassungs-Vintages;

Berechnen eines vierdimensionalen (4D) Flusses von oberflächenkonsistenter Amplitudenkorrektur (932) an den seismischen Überwachungsspurendaten (922), beschränkt durch die kombinierte Amplitudenkarte (930) und einen Bin-Term, basierend auf einem vorbestimmten Zeitfenster und Erzeugen eines 4D-Satzes von oberflächenkonsistenten Quellen- und Empfängerskalaren;

Erzeugen eines 4D-Stapels von korrigierten seismischen Überwachungsspurendaten (940) durch Anwenden des 4D-Satzes von oberflächenkonsistenten Quellen- und Empfängerskalaren auf die seismischen Überwachungsspurendaten (922); und
Erzeugen einer 4D-Amplitudenkarte (934), die mit dem vorbestimmten Zeitfenster assoziiert ist und auf dem 4D-Stapel von korrigierten seismischen Überwachungsspurendaten (922) basiert.

9. System zum Verarbeiten von seismischen Daten durch Beschränken einer oberflächenkonsistenten Gleichung, die mit einer Korrektur von Wellenlängen mit einem oberflächenkonsistenten seismischen Attribut assoziiert ist, wobei das System **dadurch gekennzeichnet ist, dass** es umfasst:

eine Speichervorrichtung (220), die zum Speichern von seismischen Vor-Stapel-Daten konfiguriert ist, die mit einem untersuchten Untergrund assoziiert sind; und
einen oder mehrere Prozessoren (208), konfiguriert zum:

Empfangen der seismischen Vor-Stapel-Daten und Erzeugen einer Karte oder Verteilung (806) des Attributs basierend auf einer A-priori-Kenntnis des Attributs aus den seismischen Spurendaten und auf Anomalien des Attributs in den seismischen Spurendaten zum Beschränken einer oberflächenkonsistenten Gleichung;
Berechnen der oberflächenkonsistenten Gleichung (812) basierend auf einem Empfängerterm, einem Quellenterm und einem Bin-Term, wobei der Bin-Term auf einen Wert beschränkt wird, der aus der Karte oder Verteilung des Attributs ausgewählt wird, um einen Satz von oberflächenkonsistenten Quellen- und Empfängerskalaren zu erzeugen;
Anwenden des Satzes von oberflächenkonsistenten Quellen- und Empfängerskalaren auf die seismischen Vor-Stapel-Spuren, um einen Stapel von korrigierten Spurendaten zu erzeugen; und
Erzeugen eines seismischen Bildes des Untergrunds basierend auf dem Stapel von korrigierten Spurendaten.

10. System nach Anspruch 9, wobei der eine oder die mehreren Prozessoren ferner zum Teilen einer Karte von erwarteten Werten durch die Karte des Attributs konfiguriert sind, wobei die Karte des Attributs Anomalien des zu korrigierenden Attributs darstellt.

11. System nach Anspruch 10, wobei die Karte von erwarteten Werten konstant ist.

12. System nach Anspruch 11, wobei die Konstante eins ist.

13. System nach Anspruch 9, wobei ein zusätzlicher Term, der einen Offset-Term umfasst, in die oberflächenkonsistente Attributkorrektur einbezogen werden kann.

## Revendications

1. Procédé de contrainte d'une équation cohérente en surface associée à une correction de longueurs d'onde présentant un attribut sismique cohérent en surface, ledit procédé étant **caractérisé en ce qu'**il comprend les étapes ci-dessous consistant à :

recevoir (808) des traces sismiques avant sommation associées à une subsurface étudiée ;
générer une carte ou une dispersion (806) dudit attribut, basée sur une connaissance *a priori* dudit attribut, à partir de données de traces sismiques, et sur des anomalies dudit attribut dans lesdites données de traces sismiques, en vue de contraindre une équation cohérente en surface ;
calculer ladite équation cohérente en surface (812), sur la base d'un terme de récepteur, d'un terme de source et d'un terme de case, dans lequel ledit terme de case est contraint à une valeur sélectionnée à partir de ladite carte ou de ladite dispersion dudit attribut, en vue de générer un ensemble de scalaires de source et de récepteur cohérents en surface ;
appliquer (816) ledit ensemble de scalaires de source et de récepteur cohérents en surface aux traces sismiques avant sommation, en vue de générer une somme de données de traces corrigées ; et
générer une image sismique de la subsurface basée sur ladite somme de données de traces corrigées.

2. Procédé selon la revendication 1, dans lequel ladite étape de génération d'une carte de l'attribut comprend en outre l'étape ci-dessous consistant à :
diviser une carte de valeurs attendues par ladite carte dudit attribut, dans laquelle ladite carte dudit attribut représente des anomalies dudit attribut à corriger.

3. Procédé selon la revendication 2, dans lequel ladite carte de valeurs attendues est une constante.

4. Procédé selon la revendication 3, dans lequel ladite constante est égale à un.

5. Procédé selon la revendication 1, dans lequel un terme supplémentaire comprenant un terme de décalage peut être inclus dans ladite correction d'attribut cohérent en surface.

6. Procédé selon la revendication 1, dans lequel ledit attribut est une amplitude.

7. Procédé selon la revendication 1, dans lequel l'étape de calcul comprend en outre les étapes ci-dessous consistant à :

> calculer un premier flux de correction d'amplitude cohérente en surface (710) basé sur une fenêtre temporelle prédéterminée, encadrer une cible prédéterminée (712), et générer un premier ensemble de scalaires de source et de récepteur cohérents en surface ;
> générer une première somme de données de traces corrigées (720) après avoir appliqué ledit premier ensemble de scalaires de source et de récepteur cohérents en surface auxdites données de traces sismiques (708) ;
> générer une première carte d'amplitude (714), associée à ladite fenêtre temporelle prédéterminée et basée sur ladite première somme de données de traces corrigées (720), en vue de contraindre une seconde correction d'amplitude cohérente en surface (716) ; et
> calculer ledit second flux de correction d'amplitude cohérente en surface (716), sur la base de ladite fenêtre temporelle, de ladite première carte d'amplitude (714) et d'un terme de case ; et
> générer un second ensemble de scalaires de source et de récepteur cohérents en surface.

8. Procédé selon la revendication 1, dans lequel l'étape de calcul comprend en outre les étapes ci-dessous consistant à :

> calculer un flux de correction d'amplitude cohérente en surface de base (916), sur lesdites données de traces de base sismiques (912), sur la base d'une fenêtre temporelle prédéterminée, et générer un ensemble de base de scalaires de source et de récepteur cohérents en surface ;
> générer une somme de base de données de traces de base sismiques corrigées (936), en appliquant ledit ensemble de base de scalaires de source et de récepteur cohérents en surface auxdites données de traces de base sismiques (912) ;
> générer une carte d'amplitude de base (914), associée à ladite fenêtre temporelle prédéterminée et basée sur ladite somme de base de données de traces de base sismiques corrigées (936) ;
> calculer un flux de correction d'amplitude cohérente en surface de surveillance (928), sur lesdites données de traces de surveillance sismiques (922), sur la base de ladite fenêtre temporelle prédéterminée, et générer un ensemble de surveillance de scalaires de source et de récepteur cohérents en surface ;
> générer une somme de surveillance de données de traces de surveillance sismiques corrigées (938), en appliquant ledit ensemble de surveillance de scalaires de source et de récepteur cohérents en surface auxdites données de traces de surveillance sismiques (922) ;
> générer une carte d'amplitude de surveillance (926), associée à ladite fenêtre temporelle prédéterminée et basée sur ladite somme de surveillance de données de traces de surveillance sismiques corrigées (938) ;
> générer une carte d'amplitude combinée (930) basée sur une combinaison de ladite carte d'amplitude de base (914) et de ladite carte d'amplitude de surveillance (926), en vue d'ajuster des amplitudes entre des époques d'acquisition ;
> calculer un flux de correction d'amplitude cohérente en surface (932) quadridimensionnel (4D) sur lesdites données de traces de surveillance sismiques (922), contraint par ladite carte d'amplitude combinée (930) et un terme de case, sur la base d'une fenêtre temporelle prédéterminée, et générer un ensemble 4D de scalaires de source et de récepteur cohérents en surface ;
> générer une somme 4D de données de traces de surveillance sismiques corrigées (940), en appliquant ledit ensemble 4D de scalaires de source et de récepteur cohérents en surface auxdites données de traces de surveillance sismiques (922) ; et
> générer une carte d'amplitude 4D (934), associée à ladite fenêtre temporelle prédéterminée et basée sur ladite somme 4D de données de traces de surveillance sismiques corrigées (922).

9. Système destiné à traiter des données sismiques en contraignant une équation cohérente en surface associée à une correction de longueurs d'onde présentant un attribut sismique cohérent en surface, ledit système étant **caractérisé en ce qu'**il comprend :

un dispositif de mémoire (220) configuré de manière à stocker des données sismiques avant sommation associées à une subsurface étudiée ; et

un ou plusieurs processeurs (208) configurés de manière à :

recevoir les données sismiques avant sommation et générer une carte ou une dispersion (806) dudit attribut, basée sur une connaissance *a priori* dudit attribut à partir de données de traces sismiques, et sur des anomalies dudit attribut dans lesdites données de traces sismiques, pour contraindre une équation cohérente en surface ;

calculer ladite équation cohérente en surface (812), sur la base d'un terme de récepteur, d'un terme de source et d'un terme de case, dans lequel ledit terme de case est contraint à une valeur sélectionnée à partir de ladite carte ou de ladite dispersion dudit attribut, en vue de générer un ensemble de scalaires de source et de récepteur cohérents en surface ;

appliquer ledit ensemble de scalaires de source et de récepteur cohérents en surface aux traces sismiques avant sommation, en vue de générer une somme de données de traces corrigées ; et

générer une image sismique de la subsurface basée sur ladite somme de données de traces corrigées.

10. Système selon la revendication 9, dans lequel ledit un ou lesdits plusieurs processeurs sont en outre configurés de manière à diviser une carte de valeurs attendues par ladite carte dudit attribut, dans laquelle ladite carte dudit attribut représente des anomalies dudit attribut à corriger.

11. Système selon la revendication 10, dans lequel ladite carte de valeurs attendues est une constante.

12. Système selon la revendication 11, dans lequel ladite constante est égale à un.

13. Système selon la revendication 9, dans lequel un terme supplémentaire comprenant un terme de décalage peut être inclus dans ladite correction d'attribut cohérent en surface.

# Figure 1

# Figure 2

EP 2 755 059 B1

# Figure 3

Angle from vertical up (deg)

# Figure 4A

# Figure 4B

# Figure 5

# Figure 6

# Figure 7

EP 2 755 059 B1

# Figure 8

# Figure 9

Figure 9 — 900

**Step 1** (902, 910, 912) — Base: Reference time interval

Initial amplitudes (918) → Conventional SCAC (916) → Stack (936) → Reference map (914)

**Step 2** (904, 922, 920) — Monitor: Reference time interval

Initial amplitudes (924) → Conventional SCAC (928) → Stack (938) → Amplitude map 1 (926)

**Step 3** (906, 930) — Building amplitude map = Reference map / Amplitude map 1

constrain →

**Step 4** (908, 922, 920) — Monitor: Reference time interval

Initial amplitudes (924) → Constrained SCAC 2 (932) → Stack (940) → Amplitude map 2 similar to reference map (934)

EP 2 755 059 B1

# Figure 10A

# Figure 10B

RC from
well log
data
multiplied
by 10000

Figure 10C

Figure 10D

Figure 10E

EP 2 755 059 B1

# Figure 11

1100

1102

Computing a first surface consistent amplitude correction flow based on a predetermined time window, bracketing a predetermined target, and generating a first set of surface consistent source and receiver scalars

1104

Generating a first stack of corrected trace data by applying said first set of surface consistent source and receiver scalars to said seismic trace data

1106

Generating a first amplitude map, associated with said predetermined time window and based on said first stack of corrected trace data, for constraining a second surface consistent amplitude correction

1108

Computing said second surface consistent amplitude correction flow, based on said time window, said first amplitude map and a bin term, and generating a second set of surface consistent source and receiver scalars

1110

Generating a second stack of corrected trace data by applying said second set of surface consistent source and receiver scalars to said seismic trace data

# Figure 12

1200

1202

Generating a map of said spectrum component, based on anomalies of said spectrum component in said seismic trace data, for constraining a surface consistent equation

1204

Computing said surface consistent equation, based on a receiver term, a source term and a bin term, wherein said bin term is constrained to a value selected from said map of said spectrum component to generate a set of surface consistent source and receiver scalars

# Figure 13

1300

1302

Computing a base surface consistent amplitude correction flow, on said seismic base trace data, based on a predetermined time window and generating a base set of surface consistent source and receiver scalars

1304

Generating a base stack of corrected seismic base trace data by applying said base set of surface consistent source and receiver scalars to said seismic base trace data

1306

Generating a base amplitude map, associated with said predetermined time window and based on said base stack of corrected seismic base trace data

1308

Computing a monitor surface consistent amplitude correction flow, on said seismic monitor trace data, based on said predetermined time window and generating a monitor set of surface consistent source and receiver scalars

1310

Generating a monitor stack of corrected seismic monitor trace data by applying said monitor set of surface consistent source and receiver scalars to said seismic monitor trace data

1312

Generating a monitor amplitude map, associated with said predetermined time window and based on said monitor stack of corrected seismic monitor trace data

1314

Generating a combined amplitude map based on combining said base amplitude map and said monitor amplitude map for adjusting amplitudes between acquisition vintages

1316

Computing a four-dimensional (4D) surface consistent amplitude correction flow on said seismic monitor trace data, constrained by said combined amplitude map and a bin term, based on a predetermined time window and generating a 4D set of surface consistent source and receiver scalars

# Figure 14

1400

1402

Time interval component

1404

Surface consistent
scalar component

1406

Amplitude map component

1408

Engine component

1412

Seismic trace
Data sets

1410

Output component

Figure 15

EP 2 755 059 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61752650

- US 20120253681 A1

### Non-patent literature cited in the description

- **R. WIGGINS ; K. LARNER ; R. WISECUP.** Residual Statics Analysis as a General Linear Inverse problem. Geophysics, 1976, vol. 41, 922-938
- **M. T. TANER ; F. KOELHER.** Surface Consistent Corrections. Geophysics, 1981, vol. 46, 17-22

- **P. CARY ; G. LORENTZ.** Four-Component Surface-Consistent Deconvolution. Geophysics, 1993, vol. 58, 383-392
- **J. MILLAR ; J. C. BANCROFT.** Long Wavelength Surface Consistent Solutions. CREWES Research Report, 2006